# EUROPÄISCHE PATENTANMELDUNG

(11) **EP 2 017 578 A2**
(43) Veröffentlichungstag der Anmeldung: **21.01.2009**
(21) Anmeldenummer: 08004449.8
(22) Anmeldetag: 11.03.2008
(51) Int. Cl.: G01C 21/36

(54) **Verfahren zum Betrieb eines mobilen Navigationsgeräts**

(30) Priorität: 17.07.2007 DE 102007033597
(71) Anmelder: Navigon AG, 20251 Hamburg (DE)
(72) Erfinder: Hahn, Bernd, 97215 Uffenheim (DE)
(74) Vertreter: von den Steinen, Axel

(57) **Zusammenfassung**

Die Erfindung betrifft ein Verfahren zum Betrieb eines mobilen Navigationsgeräts (1) in einem Fahrzeug, wobei das Fahrzeug mit einem Radiogerät (10) ausgestattet ist, und wobei das Navigationsgerät (1) zumindest eine Einrichtung (3) zur Erzeugung von Manöveranweisungen und eine Sendervorrichtung (7) zur Erzeugung von Radiosignalen aufweist, und wobei Signale mittels der Sendervorrichtung (7) vom Navigationsgerät (1) an den Empfangsteil (11) des Radiogeräts (10) übertragbar sind, mit folgenden Verfahrensschritten:
a) Berechnung einer graphisch anzuzeigenden Darstellung einer Manöveranweisung (14, 15, 16, 17) (Manöveranzeige);
b) Codierung der Manöveranzeige (14, 15, 16, 17) als Radiosignal,
c) Sendung der als Radiosignal codierten Manövcranzeige (14, 15, 16, 17) von der Sendervorrichtung (7) des Navigationsgeräts, um die Manöveranzeige (14, 15, 16, 17) an das Radiogerät (10) zu übertragen.

## Beschreibung

Die Erfindung betrifft ein Verfahren zum Betrieb eines mobilen Navigationsgcräts in einem Fahrzeug nach der Lehre des Anspruchs 1.

Aus der DE 20 2006 011 878 U1 ist ein Navigationsgerät bekannt, das den Fahrer eines Fahrzeugs beim Auffinden einer geeigneten Route zum Anfahren eines Ziels unterstützt. Das Navigationsgerät erzeugt dabei insbesondere auch akustische Navigationsanweisungen. Diese Navigationsanweisungen werden mittels einer in das Navigationsgerät integrierten Sendevorrichtung in Radiosignale umgewandelt und auf einer UKW-Frequenz mit relativ geringer Sendeleistung übertragen. Die von der Sendevorrichtung des Navigationsgeräts erzeugten UKW-Radiosignale werden mittels der Radioantenne des Fahrzeugs empfangen und durch Verwendung des in das Fahrzeug eingebauten Radiogeräts im Fahrzeug akustisch wahrnehmbar abgestrahlt. Auf diese Weise können die akustischen Navigationsanweisungen unter Verwendung des in das Fahrzeug eingebauten Radiogerät, insbesondere unter Verwendung der Lautsprechanlage, mit sehr hoher Klangqualität ausgegeben werden.

Nachteilig an dem aus dem Stand der Technik bekannten Verfahren ist es, dass allein akustische Manöveranweisungen übertragen und unter Nutzung der Einbauten im Fahrzeug ausgegeben werden können. Um grafisch anzuzeigende Manöveranweisungen für den Benutzer darstellen zu können, ist deswegen an den bekannten Navigationsgeräten zwingend eine entsprechend geeignete Anzeigeeinrichtung, beispielsweise ein LCD-Display, erforderlich. Außerdem ist die Anzeigeeinrichtung eines Navigationsgeräts häufig deshalb nicht optimal, da das Navigationsgerät nicht in der optimalen Position im Sichtfeld des Fahrers positioniert werden kann. Dies ist insbesondere bei Nachrüstgeräten der Fall.

Aufgabe der vorliegenden Erfindung ist es deshalb, ein neues Verfahren zum Betrieb eines mobilen Navigationsgeräts vorzuschlagen, durch das die Ausgabernöglichkeiten von Manöveranweisungen im Fahrzeug erweitert werden.

Diese Aufgabe wird durch ein Verfahren nach der Lehre des Anspruchs 1 gelöst.

Vorteilhafte Ausführungsformen der Erfindung sind Gegenstand der Unteransprüche.

Das erfindungsgemäße Verfahren beruht auf der Grundannahme, dass grafisch anzuzeigende Darstellungen von Manöveranweisungen, die nachfolgend als Manöveranzeigen bezeichnet werden sollen, berechnet werden. Diese Manöveranzeigen geben dem Fahrer ganz allgemein Informationen über die von ihm auszuführenden Fahrmanöver, um der vom Navigationsgerät berechneten Route zu folgen.

Um diese Manöveranzeigen unter Verwendung von im Fahrzeug ohnehin vorhandenen Anzeigeeinrichtungen, beispielsweise dem Display eines im Fahrzeug eingebauten Radiogeräts, anzeigen zu können, wird die Manövcranzeige im Navigationsgerät als Radiosignal codiert. Diese als Radiosignal codierte Manöveranzeige, wird anschließend von der Sendevorrichtung des Navigationsgeräts, beispielsweise auf der UKW-Frequenz, gesendet, so dass der Empfangsteil des Radiogeräts im Fahrzeug diese codierte Manöveranzeige empfangen und anschließend an einer im Fahrzeug ohnehin vorhandenen Anzeigeeinrichtung anzeigen kann.

Um die als Radiosignal codierten Manöveranzeigen im Fahrzeug anzeigen zu können, ist eine Decodierung der Manöveranzeige erforderlich. Um für diese Decodierung keine zu hohen Geräteanforderungen stellen zu müssen bzw. um eine Echtzeitdarstellung der Manöveranzeige im Fahrzeug zu ermöglichen, ist es deshalb besonders vorteilhaft, wenn die grafische Darstellung der Manöveranzeigen besonders einfach gehalten ist, um die Kodierung bzw. Decodierung in einfacher Weise und in kurzer Zeit zu ermöglichen. Besonders einfach und effektiv können die Manöveranzeigen als Textnachrichten unter Verwendung von Buchstaben, Ziffern und Sonderzeichen codiert werden.

Gemäß welchen Regeln die Kodierung bzw. Decodierung der Manöveranzeige erfolgt, ist grundsätzlich beliebig. Besonders vorteilhaft ist es, wenn die Manöveranzeige gemäß dem RDS-Standard (Radio Data System) codiert ist. Dies ist insbesondere deshalb von Vorteil, da die allermeisten aus dem Stand der Technik bekannten Radiogerätetypen das RDS-Protokoll decodieren können, so dass ohne weitere Geräteanforderungen die von der Sendevorrichtung des Navigationsgeräts ausgesendeten Manöveranzeigen im Radiogerät gemäß dem RDS-Standard decodiert werden können. Besonders vorteilhaft ist es dabei, wenn die Manöveranzeige als PI-Dienst (Program Idcntification) gemäß dem RDS-Standard codiert ist. Über den PI-Dienst des RDS-Sendeprotokolls werden üblicherweise die Programmkennungcn der verschiedenen Radioprogramme übermittelt. Da diese Programmkennungen letztendlich aber auch aus Textzeichen, nämlich Buchstaben, Ziffern und Sonderzeichen, bestehen, ist es ohne Weiteres möglich, in dem PI-Dienst des RDS-Sendeprotokolls auch eine grafisch anzuzeigende Manöveranzeige zu codieren.

Die Bestandteile der grafischen Manöveranzeige, die als codiertes Radiosignal ans Radiogerät übertragen wird, sind grundsätzlich beliebig. Um einfache Ausgestaltungen zu ermöglichen, kann die Manöveranzeige bevorzugt Pfeilsymbole zur Anzeige der Abbiegeeinrichtung des nächsten Manövers enthalten.

Außerdem ist es besonders vorteilhaft, wenn die Manöveranzeige Textangaben zur Anzeige der Entfernung bis zum nächsten Manöver enthält.

Im Falle der Angabe von Entfernungen bis zum nächsten Manöver ist es besonders vorteilhaft, wenn die entsprechende Anzeige dynamisch aktualisiert wird, während sich das Fahrzeug dem Manöver nähert. Dies bedeutet mit anderen Worten, dass ständig die aktuelle Entfernung angegeben wird, so dass der Fahrer über die entsprechende Anzeige echtzeitgenau über die aktuelle Entfernung informiert werden kann.

Weiter kann die Manöveranzeige auch Daten zur Beschreibung der Zielstraße des nächsten Manövers enthalten. Dies kann beispielsweise durch Angabe des Straßennamens oder einer Straßennummer, beispielsweise der Nummer einer Autobahn oder der Nummer einer Bundesstraße, geschehen.

Neben den Daten zur Beschreibung der Manöveranweisung kann die Manöveranzeige auch noch zusätzliche Daten enthalten. Bei diesen Daten kann es sich beispielsweise um die Beschreibung von Geschwindigkeitsbeschränkungen und/oder Verkehrsinformationen handeln. Diese zusätzlichen Daten werden dann ebenfalls auf das Radiosignal codiert und zusammen mit der codierten Manöveranzeige von der Sendeeinrichtung des Navigationsgeräts an den Empfangsteil des Radiogeräts übertragen. Auf diese Weise können diese zusätzlichen Daten dann an der Anzeigeeinrichtung im Fahrzeug angezeigt werden.

Nach einer weiteren Variantc kann die Manöveranzeige auch Daten zur Beschreibung von Wegweisern oder Richtungshinwciscn, die entlang einer vom Navigationsgerät berechneten Route zu erwarten sind, enthalten. Die entsprechenden Informationen, beispielsweise über Richtungshinweisschilder entlang der Straßen eine Straßennetzes, sind in den Datenbanken zur Beschreibung des Straßennetzes üblicherweise als Wegweiserdatensätze gespeichert und können einzeln selektiert werden.

Soweit die Manöveranzeige unterschiedliche Informationsgehalte enthält, können diese verschiedenen Bestandteile der Manöveranzeige zeitlich versetzt gesendet und angezeigt werden. So ist es beispielsweise möglich, neben der Angabe der Entfernung bis zum nächsten Manöver in periodischem Abstand auch eine Geschwindigkeitsbcschränkung im augenblicklichen Streckenabschnitt anzuzeigen. Alternativ dazu ist es auch denkbar, dass unterschiedliche Bestandteile der Manöveranzeige mit unterschiedlichen Prioritäten markiert werden, wobei bei der Anzeige dann immer die höher priorisierten Bestandteile zuerst und niedrig priorisierte Bestandteile erst später angezeigt werden.

Neben der Funktionalität zum Navigieren kann das Navigationsgerät auch noch weitere Funktionalitäten aufweisen. So kann in das Navigationsgerät ein Medienabspielgerät, beispielsweise ein CD-Abspielgerät, ein DVD-Abspielgerät, ein MP3-Abspielgerät und/oder ein DVB-Abspielgerät, integriert sein. Die entsprechenden Ausgangssignale dieser Abspielgeräte, bei denen es sich regelmäßig um akustische Inhalte handelt, können ebenfalls per Radiosignal vom Navigationsgerät an das Radiogerät übertragen werden. Das Radiosignal umfasst dann neben der codierten Manöveranzeige auch noch die akustischen Inhalte.

Entsprechend der Funktionalität eines Medienabspielgeräts können in das Navigationsgerät auch noch die Funktionalität eines Mobiltelefons und die Funktionalität eines zweiten Radiogcräts integriert sein. Die entsprechenden akustischen Signale dieser Geräte (Mobiltelefon, Radiogerät) werden dann ebenfalls auf das Radiosignal der Sendevorrichtung des Navigationsgeräts aufmoduliert und an das Radiogerät im Fahrzeug übertragen.

In welcher Weise die Anzeige der Manöveranzeige im Fahrzeug erfolgt, ist grundsätzlich beliebig. Nach Empfang der Manöveranzeige im Radiogerät kann diese beispielsweise besonders einfach am Display des Radiogeräts angezeigt werden. Nach einer bevorzugten Ausführungsform ist es vorgesehen, dass das Radiogerät die dccodierte Manöveranzeige an eine externe Funktionseinheit im Fahrzeug, beispielsweise ein Multifunktionsdisplay im Armaturenbrett des Fahrzeugs, überträgt. Mittels einer Anzeigeeinrichtung in dieser externen Funktionseinheit kann die Manövcranzeige dann angezeigt werden, wodurch insbesondere eine optimale Positionierung der Manöveranzeige im Blickfeld des Benutzers ermöglicht werden kann.

Die Anzeige der Navigationsanweisung an einer Anzeigeeinrichtung des Fahrzeugs kann selbstverständlich auch durch die Anzeige von Manöveranweisungen an einer Anzeigeeinrichtung des Navigationsgeräts selbst ergänzt werden. Im Ergebnis stehen dem Fahrer dann zwei Anzeigen zur Verfügung. Die verschiedenen Anzeigen können dementsprechend auf die jeweilige Nutzung abgestimmt sein und unterschiedliche Anzeigebestandteile umfassen.

Die gleichzeitige Ausgabe von grafischen Manöveranzeigen und akustischen Manöveranzeigen ist insbesondere auch deshalb von Vorteil, weil grafische Manöveranzeigen ohne Störung des Fahrers über einen längeren Zeitraum angezeigt werden können. Es ist deshalb besonders vorteilhaft, wenn Manöveranzeigen über einen längeren Zeitraum gesendet und angezeigt werden als die zugeordneten akustischen Manöveranweisungen. Wird dem Fahrer beispielsweise angesagt, dass das nächste Manöver in 400 Metern erfolgen muss, kann mittels der grafischen Manöveranzeige diese Information über einen längeren Zeitraum kontinuierlich angezeigt und dynamisch aktualisiert werden.

Erfolgt die Sendung der codierten Manöveranzeige über einen längeren Zeitraum, sollte automatisch nach einer vorbestimmten Dauer und/oder nach Zurücklegen einer vorbestimmen Distanz die Radioübertragung der Manöveranzeige wieder beendet werden. Dadurch wird gewährleistet, dass bereits nicht mehr aktuelle Bestandteile der Manöveranweisung nicht mehr angezeigt werden. In diesem Fall ist es denkbar, dass keine Meldung oder eine Standardmeldung angezeigt wird oder aber eine durch den Nutzer im Navigationsgerät konfigurierbare Anzeige, die z.B. die Distanz und/oder Zeit zum Ziel bzw. zum nächsten Manöver repräsentiert und sich automatisch aktualisiert.

Ebenfalls ist es vorteilhaft, wenn der Nutzer die beschriebene Funktion an seinem Navigationsgerät aktivieren und deaktivieren kann, da je nach Fahrzeugausstattung nicht immer ein geeignetes Display zur Verfügung steht und somit Rechenleistung am Navigationsgerät eingespart werden kann.

Eine Ausführungsform der Erfindung ist in den Zeichnungen schematisch dargestellt und wird nachfolgend beispielhaft erläutert.

Es zeigen:
- Fig. 1: den funktionellen Aufbau eines mobilen Navigationsgeräts im Zusammenwirken mit einem Radiogerät in einem Fahr- zeug unter Verwendung des erfindungsgemäßen Verfah- rens,
- Fig. 2a bis 2d: verschiedene Beispiele von Manöveranzeigen und sonsti- gen Anzeigen, die als RDS-Textnachrichten codiert und per Radiosignal übertragen worden sind.

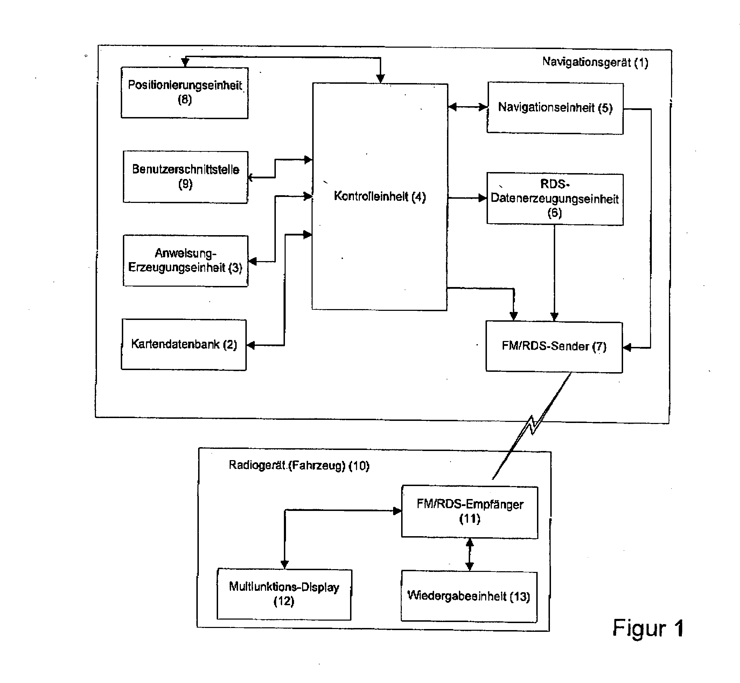

Fig. 1 stellt den funktionellen Aufbau eines Navigationsgeräts 1 in Zusammenwirken mit einem in einem Fahrzeug eingebauten Radiogerät 10 beim Betrieb des erfindungsgemäßen Verfahrens dar. Das Navigationsgerät umfasst dabei die Funktionalität einer Kartendatenbank 2, einer Anweisungserzeugungseinheit 3, einer zentralen Kontrolleinheit 4, einer Navigationseinhcit 5, einer RDS-Datenerzäugungseinheit 6, eines FM/RDS-Senders 7 und einer Positionierungseinheit 8. Das Radiogerät 10 umfasst die Funktionalität eines FM/RDS-Empfängers 11, einer Wiedergabeeinheit 13 zur Wiedergabe von akustischen Signalen und eines Multifunktions-Displays 12 zur Anzeige von grafischen Manöveranzeigen.

Bei Durchführung des erfindungsgemäßen Verfahrens wird in der Anweisungserzeugungseinheit 3 eine Manöveranweisung erzeugt und an die Kontrolleinheit 4 weitergeleitet. In der Kontrolleinheit 4 wird aus der Manövcranweisung eine grafische Manöveranzeige generiert und diese an die RDS-Datenerzeugungseinheit 6 weitergeleitet. In der RDS-Datenerzeugungseinheit 6 wird die grafische Manövcranzeige in ein Radiosignal gemäß dem RDS-Sendeprotokoll codiert und anschließend an den FM/RDS-Sender 7 weitergeleitet. Der FM/RDS-Sender 7 sendet das codierte Manöveranzeige-UKW-Radiosignal an den FM/RDS-Empfänger 11 des Radiogeräts 10 im Fahrzeug. Dort wird das RDS-Signal decodiert und die grafisch anzuzeigende Manöveranzeige an das Multifunktions-Display 12 weitergeleitet. Dort wird die Manöveranzeige dann für den Benutzer im Fahrzeug angezeigt.

Parallel dazu können auch noch akustische Manöveranweisungen per Radiosignal vom Sender 7 an den Empfänger 11 übertragen und dann von der Wiedergabeeinheit 13 akustisch hörbar im Fahrzeug wiedergegeben werden. Beim Betrieb des Navigationsgeräts 1 im Zusammenwirken mit dem Radiogerät 10 ist dann beispielsweise folgende Manöveranweisung denkbar.

Der Fahrer fährt auf die Autobahn und hört folgende akustische Fahranweisung: "Dem Straßenverlauf 146 km folgen". Gleichzeitig wird im Display des Autoradios bzw. am Multifunktions-Display des Kombiinstruments im Armaturenbrett folgender Text dargestellt: "↑146 km". Im weiteren Verlauf der Fahrt wird diese grafische Information ständig dynamisch aktualisiert und die aktuelle Entfernungskilometerzahl angezeigt.

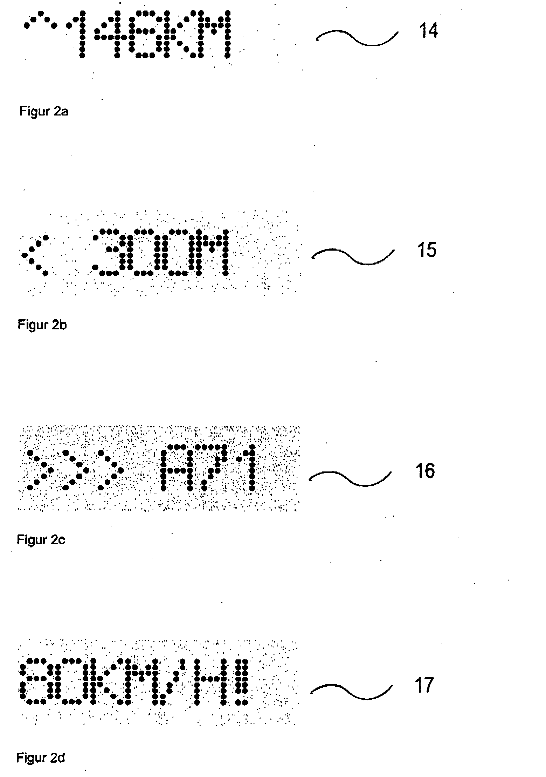

Fig. 2a zeigt die Anzeige am Display 12 des Radiogeräts 10 gemäß dieser Manövcranzeige 14. Die Manöveranzeige 14 ist als einfache Textnachricht aufgebaut und kann insofern ohne Probleme als PI-Dienst des RDS-Sendeprotokolls übertragen werden.

Fig. 2b bis 2d zeigen weitere Beispiele 15, 16 und 17 von als RDS-Signale codierten Manöveranzeigen. Die Manöveranzcige 15 gemäß Fig. 2b kann beispielsweise durch die akustische Manövcranweisung begleitet werden: "in 300 Meter links abbiegen". Auch Kombinationen von Informationen, wie Distanz und Zielstraße, sind denkbar, z.B. "<300m B8".

Die Manöveranzeige 16 in Fig. 2c kann durch die akustische Fahranweisung begleitet werden: "rechts abbiegen auf die A71".

Wie in Fig. 2d dargestellt, können neben den Daten des eigentlichen Manövers mit einer Manöveranzeige 17 auch weitere Daten übertragen und als zusätzliche Anzeige am Display angezeigt werden. Beispielsweise können im Navigationsgerät vorhandene Informationen hinsichtlich Geschwindigkeitsbeschränkungen als RDS-Signal codiert und vom Navigationsgerät an das Radiogerät übertragen werden. Fig. 2d zeigt beispielsweise die Manöveranzeige 17, die eine Geschwindigkeitsbeschränkung von 80 km/h signalisiert. Diese grafische Anzeige könnte beispielsweise durch die akustische Ansage begleitet werden: "Achtung Geschwindigkeitsbegrenzung 80 km/h".

Bei Ankunft am gewünschten Ziel könnte die Manöveranzeige "Ziel" in der grafischen Anzeige ausgegeben werden, die durch die Manöver-Ansage "Sie haben Ihr Ziel erreicht" begleitet werden kann. Wird zudem als Ziel ausgegeben "Sie haben Ihr Ziel erreicht, es liegt auf der rechten Seite", so kann die Ausgabe folgendermaßen aussehen: "Ziel >".

## Patentansprüche

1. Verfahren zum Betrieb eines mobilen Navigationsgeräts (1) in einem Fahrzeug, wobei das Fahrzeug mit einem Radiogerät (10) ausgestattet ist, und wobei das Navigationsgerät (1) zumindest eine Einrichtung (3) zur Erzeugung von Manöveranweisungen und eine Sendervorrichtung (7) zur Erzeugung von Radiosignalen aufweist, und wobei Signale mittels der Sendervorrichtung (7) vom Navigationsgerät (1) an den Empfangsteil (11) des Radiogeräts (10) übertragbar sind,
mit folgenden Verfahrensschritten:
a) Berechnung einer graphisch anzuzeigenden Darstellung einer Manöveranweisung (14, 15, 16, 17) (Manöveranzeige);
b) Codierung der Manöveranzeige (14, 15, 16, 17) als Radiosignal,
c) Sendung der als Radiosignal codierten Manöveranzeige (14, 15, 16, 17) von der Sendervorrichtung (7) des Navigationsgeräts, um die Manöveranzeige (14, 15, 16, 17) an das Radiogerät (10) zu übertragen.

2. Verfahren nach Anspruch 1,
**dadurch gekennzeichnet,**
**dass** die Manöveranzeige (14, 15, 16, 17) als Textnachricht unter Verwendung von Buchstaben, Ziffern und Sonderzeichen codiert ist.

3. Verfahren nach Anspruch 1 oder 2,
**dadurch gekennzeichnet,**
**dass** die Manöveranzeige (14, 15, 16, 17) gemäß dem RDS-Standard (Radio Data System) codiert ist, insbesondere dass die Manövcranzeige (14, 15, 16, 17) als PI-Dienst (Program Identification) gemäß dem RDS-Standard codiert ist.

4. Verfahren nach einem der Ansprüche 1 bis 3,
**dadurch gekennzeichnet,**
**dass** die Manöveranzeige (14, 15, 16, 17) Pfeilsymbole zur Anzeige der Fahrtrichtung, insbesondere der Abbiegerichtung des nächsten Manövers, enthält.

5. Verfahren nach einem der Ansprüche 1 bis 4,
**dadurch gekennzeichnet,**
**dass** die Manöveranzeige (14, 15) Textangaben zur Anzeige der Entfernung bis zum nächsten Manöver enthält.

6. Verfahren nach Anspruch 5,
**dadurch gekennzeichnet,**
**dass** die Textangaben (14) zur Anzeige der Entfernung bis zum nächsten Manöver dynamisch aktualisiert werden.

7. Verfahren nach einem der Ansprüche 1 bis 6,
**dadurch gekennzeichnet,**
**dass** die Manöveranzeige (16) Daten zur Beschreibung der Zielstraße des nächsten Manövers enthält.

8. Verfahren nach einem der Ansprüche 1 bis 7,
**dadurch gekennzeichnet,**
**dass** die Manöveranzeige (17) zusätzlich Daten zur Beschreibung von Geschwindigkeitsbeschränkungen und/oder Verkehrsinformationen enthält.

9. Verfahren nach einem der Ansprüche 1 bis 8,
**dadurch gekennzeichnet,**
**dass** die Manöveranzeige (16) Daten zur Beschreibung von Wegweisern oder Richtungshinweisen, die entlang einer vom Navigationsgerät berechneten Route zu erwarten sind, enthält.

10. Verfahren nach einem der Ansprüche 1 bis 9,
**dadurch gekennzeichnet,**
**dass** die verschiedenen Bestandteile der Manöveranzeige (14, 15, 16, 17) zeitlich versetzt gesendet und angezeigt werden.

11. Verfahren nach einem der Ansprüche 1 bis 10,
**dadurch gekennzeichnet,**
**dass** das Navigationsgerät (1) die Funktionalität eines Medienabspielgeräts, insbesondere die Funktionalität eines DVD-Abspielgeräts und/oder die Funktionalität eines CD-Abspielgeräts und/oder die Funktionalität eines MP3-Abspielgeräts und/oder die Funktionalität eines DVB-Abspielgeräts (Digital Video Broadcasting), umfasst und akustisch und/oder optisch auszugebende Medieninhalte als Teil der Radiosignale vom Navigationsgerät an das Radiogerät übertragbar sind.

12. Verfahren nach einem der Ansprüche 1 bis 11,
**dadurch gekennzeichnet,**
**dass** das Navigationsgerät (1) die Funktionalität eines Mobiltelefons umfasst und akustisch auszugebende Mitteilungen des Mobiltelefons, insbesondere akustisch auszugebende Gesprächsinhalte, als Teil der Radiosignale vom Navigationsgerät an das Radiogerät übertragbar sind.

13. Verfahren nach einem der Ansprüche 1 bis 12,
**dadurch gekennzeichnet,**
**dass** das Navigationsgerät (1) die Funktionalität eines zweiten Radiogeräts umfasst und akustisch auszugebende Radioprogramminhalte als Teil der Radiosignale vom Navigationsgerät an das erste Radiogerät im Fahrzeug übertragbar sind.

14. Verfahren nach einem der Ansprüche 1 bis 13,
**dadurch gekennzeichnet,**
**dass** das erste Radiogerät (10) im Fahrzeug mit einer externen Funktionseinheit im Fahrzeug verbunden ist, insbesondere mit einem Multifunktionsdisplay (12) im Armaturenbrett des Fahrzeuges, wobei die ans erste Radiogerät (10) übertragene Manöveranzeige (14, 15, 16, 17) an einer Anzeigeeinrichtung der externen Funktionseinheit (12) anzeigbar ist.

15. Verfahren nach einem der Ansprüche 1 bis 14,
**dadurch gekennzeichnet,**
**dass** die Manöveranzeige (14, 15, 16, 17) über einen längeren Zeitraum gesendet und angezeigt wird als die zugeordnete akustische-Manöveranweisung angesagt wird.

16. Verfahren nach einem der Ansprüche 1 bis 15,
**dadurch gekennzeichnet,**
**dass** die Sendung der Manöveranzeige (14, 15, 16, 17) nach einer vorbestimmten Dauer und/oder nach Zurücklegen einer vorbestimmten Distanz beendet wird.
